# FASCICULE DE BREVET EUROPEEN

(11) **EP 0 882 967 B1**
(45) Date de publication et mention de la délivrance du brevet: **18.08.2004**
(21) Numéro de dépôt: 98401351.6
(22) Date de dépôt: 05.06.1998
(51) Int. Cl.: G01M 3/28

(54) **Appareillage de signalisation de débit notamment dû à une fuite dans un circuit de fluide**
Apparatur zur Anzeige einer Strömung, insbesondere verursacht durch ein Leck in einem Flüssigkeitskreislauf
Apparatus for indicating a flow, in particular due to a leak in a fluid circuit

(30) Priorité: 06.06.1997 FR 9707053
(43) Date de publication de la demande: 09.12.1998
(73) Titulaire: Regie Autonome des Transports Parisiens RATP, 75599 Paris Cedex 12 (FR)
(72) Inventeur: Vezy, Marc, 94110 Arcueil (FR)
(74) Mandataire: Jacobson, Claude

(56) Documents cités:
- DE-A- 3 633 660
- FR-A- 2 344 009
- FR-A- 2 694 087

## Description

L'invention concerne les réseaux de distribution de fluide, et plus particulièrement un appareillage permettant de détecter une surconsommation due à une fuite dans un tel réseau, en signalant l'existence de tout débit de fluide d'origine inconnue dans un circuit, si nécessaire après isolement de ce circuit de sa source d'alimentation par un barrage (voir FR-A-2 694 087).

Les réseaux de distribution de fluide, par exemple les réseaux d'alimentation en eau, sont souvent sujets à des fuites du type goutte-à-goutte ou microfuites, plus difficiles à détecter et à localiser que des fuites franches dont les manifestations sont généralement spectaculaires et qui sont localisables visuellement.

Ces microfuites sont le plus souvent dues à la fermeture incomplète d'un robinet, à la défectuosité d'un robinet ou d'un joint, ou encore à une fissure dans une canalisation. Bien que la perte instantanée de liquide soit faible, les conséquences sont souvent désastreuses (dégâts dus à l'humidité dans le sol ou dans un bâtiment) et le surcoût dû à la surconsommation en liquide est considérable.

Les appareils de détection de surconsommation actuels sont soit incapables de détecter de telles fuites goutte-à-goutte, soit très onéreux parce que complexes et notamment informatisés.

L'invention à pour but de remédier à ces inconvénients et concerne à cet effet un appareillage de signalisation de débit dans un circuit de liquide, caractérisé en ce qu'il comporte un détecteur comportant une cloison mobile et adapté pour traduire la présence d'un débit par une variation de la pression sur la cloison qui est fonction de l'intensité du débit, un transducteur fonctionnant en réponse à l'éventuelle variation de pression et qui délivre un signal électrique de débit en fonction de cette variation de pression, une unité centrale de commande reliée électriquement au transducteur pour en recevoir le signal électrique de débit et élaborer au moins un signal électrique de commande en fonction du signal électrique de débit, et au moins un dispositif de signalisation relié électriquement à l'unité centrale de commande pour en recevoir le signal électrique de commande et émettre en réponse un signal d'avertissement lumineux et/ou sonore lors de la détection d'un débit.

Ainsi, l'appareillage peut détecter un écoulement anormal en aval du point du circuit dans lequel est inséré le détecteur, même en l'ignorance de la consommation normale ou habituelle due, par exemple, dans le cas d'un circuit de distribution d'eau, au fonctionnement de lavabos, de chasses d'eau, d'un dispositif d'arrosage d'un lave-linge, etc.

Par ailleurs, la cause première des détériorations qui sont à l'origine de telles fuites est souvent l'existence de surpressions temporaires dans le réseau, par exemple pendant les périodes de faible consommation, notamment pendant le nuit.

Aussi, selon des caractéristiques préférentielles avantageuses de l'invention, le détecteur est un régulateur de pression à membrane, dont la membrane constitue la cloison mobile et sépare une première et une deuxième chambres, la première chambre étant insérée dans le circuit de fluide.

Ainsi, la pression dans la région du circuit en aval du régulateur est normalement maintenue constante, et un test de fuite peut être réalisé à tout moment grâce à ce détecteur.

Dans une première forme de réalisation de l'invention, l'appareillage peut présenter une ou plusieurs des caractéristiques suivantes :
- l'appareillage de signalisation de débit comporte des moyens de transmission de variation de pression pour transmettre l'éventuelle variation de pression émise par le détecteur au transducteur qui délivre en réponse un signal électrique de débit en fonction de la variation de pression qui lui est transmise ;
- le transducteur est un pressostat auquel l'éventuelle variation de pression est transmise par des moyens de transmission de variation de pression comportant au moins un tube reliant le pressostat au détecteur ;
- la deuxième chambre du régulateur est percée d'un trou pour que cette chambre soit mise en communication, par des moyens de transmission de variation de pression, avec le transducteur ;
- les moyens de transmission de variation de pression, pour relier le détecteur au transducteur, comportent au moins un tube, et l'ensemble constitué par la deuxième chambre du détecteur et le tube contient une huile et au moins une poche d'air qui s'étend dans au moins une partie du tube, du côté du transducteur.

Dans d'autres formes de réalisation de l'invention, l'appareillage peut présenter une ou plusieurs des caractéristiques suivantes :
- le transducteur est un interrupteur électrique ;
- le transducteur est un interrupteur électrique disposé à l'extérieur du détecteur et comportant un organe mobile adapté pour coopérer avec le détecteur par l'intermédiaire de moyens de transmission ;
- le transducteur est un interrupteur électrique comportant un organe mobile adapté pour coopérer avec le détecteur par l'intermédiaire de moyens de transmission comportant une tige mobile solidarisée à la cloison mobile du détecteur ;
- l'organe mobile de l'interrupteur électrique est accouplé à la tige mobile par l'intermédiaire d'un levier ;
- le transducteur est un interrupteur électrique disposé à l'intérieur du détecteur et auquel l'unité centrale de commande est reliée électriquement par des conducteurs traversant une paroi du détecteur ;
- le transducteur est un interrupteur électrique dont des contacts sont portés par des bras flexibles ;
- l'appareillage comporte des moyens de réglage d'un seuil de déclenchement du transducteur ;
- le transducteur est un interrupteur électrique solidarisé à la cloison mobile du détecteur.

L'appareillage peut également présenter une ou plusieurs des caractéristiques suivantes :
- l'appareillage comporte une électrovanne reliée électriquement à l'unité centrale de commande pour en recevoir également un signal électrique de commande, et insérée dans le circuit de fluide en amont du détecteur pour autoriser et interrompre le transfert de fluide vers l'aval en fonction au moins de ce signal électrique de commande ;
- l'appareillage comporte un interrupteur à commande manuelle inséré dans un circuit de liaison électrique de l'unité centrale de commande et de l'électrovanne adapté pour transmettre à l'électrovanne un signal électrique de commande ;
- l'appareillage comporte un manomètre en aval du détecteur ;
- l'unité centrale de commande est dans un boîtier muni d'au moins un dispositif de signalisation de débit ;
- l'unité centrale de commande est dans un boîtier, et un autre boîtier situé à distance de celui de l'unité centrale de commande est muni d'au moins un dispositif de signalisation de débit ;
- l'appareillage comporte au moins un circuit de temporisation, pour décaler le signal de commande de l'électrovanne par rapport au signal de commande du dispositif de signalisation d'un temps de retard prédéterminé.

D'autres caractéristiques et avantages de l'invention ressortiront de la description qui va suivre de formes de réalisation de l'invention données à titre d'exemples non limitatifs et illustrées par les dessins joints dans lesquels :
- la figure 1 est un schéma d'une partie d'un réseau d'alimentation en eau équipée d'un appareillage selon l'invention ;
- la figure 2 est une vue schématique en perspective d'une unité de commande entrant dans la constitution d'un appareillage selon l'invention ;
- la figure 3 est un schéma de principe en coupe d'un régulateur de pression connu bien adapté à subir des modifications destinées à lui faire remplir également la fonction de détecteur dans un appareillage selon l'invention ;
- la figure 4 est une vue schématique en coupe du régulateur de pression de la figure 3 modifié pour remplir également la fonction de détecteur dans un appareillage selon l'invention ;
- la figure 5 est une vue montrant des moyens de transmission de pression entrant dans la constitution d'un appareillage selon l'invention.
- la figure 6 est une vue schématique en coupe d'une variante du régulateur de pression de la figure 3 modifiée pour entrer dans la constitution d'une deuxième forme de réalisation d'un appareillage selon l'invention, et
- la figure 7 est une vue schématique en coupe d'une autre variante du régulateur de pression de la figure 3 modifiée pour entrer dans la constitution d'une troisième forme de réalisation d'un appareillage selon l'invention.

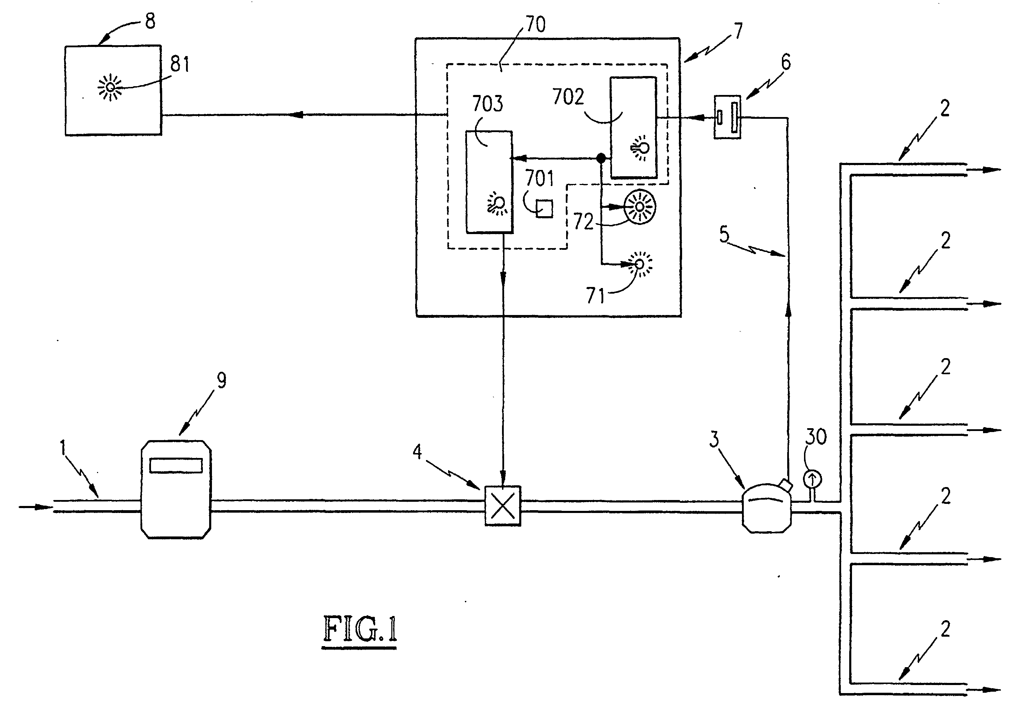

L'installation de la figure 1 montre une partie d'un réseau de distribution de fluide tel que de l'eau, comportant une conduite d'amenée 1 destinée à être reliée à une source d'alimentation en eau, et des conduites de distribution 2 sous la forme de ramifications raccordées à la conduite d'amenée.

Cette partie de réseau est munie d'un appareillage de signalisation de débit destiné à détecter l'existence de fuite(s) éventuelle(s) dans les ramifications.

De manière générale cet appareillage comporte un détecteur de débit 3 présentant une chambre 31 insérée dans la conduite d'amenée de manière que le débit dans la chambre 31 soit celui qui existe dans cette conduite 1. Cependant, les débits de faible intensité, et en particulier les débits goutte-à-goutte dus à une fuite, étant très difficiles à mettre en évidence, particulièrement lorsqu'une telle installation est en service, parce qu'ils s'ajoutent de manière insignifiante à un débit important, il a été trouvé approprié de tenter de les détecter lorsque l'installation n'est pas en service, et de manière plus avantageuse quand la partie du réseau à vérifier est isolée de sa source d'alimentation. Aussi, en amont du détecteur de débit 3, il est prévu un barrage sous la forme d'un robinet ou d'une électrovanne 4, appartenant ou non à l'appareillage selon l'invention ; ce barrage est destiné à être fermé lorsque l'on désire tester l'installation en ce qui concerne les microfuites, de telle sorte que, si aucun fluide n'est soutiré volontairement, le fluide perdu par un éventuel écoulement goutte-à-goutte ne soit pas remplacé, et que la perte d'une certaine quantité de fluide fournisse une information interprétable indubitablement comme étant due à une microfuite.

Le détecteur de débit 3 est, selon l'invention, adapté pour traduire la présence d'un débit dans la conduite d'amenée 1 par une variation de pression ; parmi les diverses possibilités de parvenir à ce résultat, une forme de réalisation de détecteur de débit particulièrement avantageuse sera décrite plus loin.

La variation de pression, qui est en fonction de l'intensité du débit, est transmise, par un conduit ou un système de conduit(s) 5, du détecteur 3 à un transducteur 6 qui délivre un signal électrique de débit en fonction de l'éventuelle variation de pression qui lui est transmise.

En plus du détecteur de débit 3, du système de conduit 5, et du transducteur 6, l'appareillage selon l'invention comporte une unité centrale de commande 70 reliée électriquement au transducteur pour en recevoir le signal électrique de débit et élaborer en fonction de celui-ci au moins un signal électrique de commande qui est fonction du signal électrique de débit, et au moins un dispositif de signalisation lumineuse 71,72 ou sonore 81 relié électriquement à l'unité centrale de commande 70 pour en recevoir le signal électrique de commande et émettre en réponse un signal d'avertissement lumineux ou sonore lors de la détection d'un débit dû à une fuite ou à l'ouverture inopinée d'un robinet de soutirage ou analogue.

Le dispositif de signalisation 71,72,81 peut être à proximité immédiate de l'unité centrale de commande 70, par exemple sur le même boîtier 7 que celle-ci, ou sur un boîtier annexe 8 situé à distance ; l'appareillage peut naturellement comporter plusieurs dispositifs de signalisation disséminés en des lieux appropriés, dont un ou davantage sur le boîtier 7 de l'unité centrale de commande 70.

Lorsque l'appareillage comporte une électrovanne 4 pour constituer le barrage par rapport à la source d'alimentation en fluide, avantageusement, celle-ci est reliée à l'unité de commande 70 pour en recevoir l'un des signaux électriques de commande pour autoriser ou interrompre le transfert de fluide vers l'aval, et éventuellement un autre signal électrique de commande dépendant d'une action manuelle, par exemple sur un interrupteur 701 comme on le verra dans la suite.

L'unité centrale de commande comporte des circuits de temporisation 702,703 pour cadencer le fonctionnement de l'appareillage.

Tout d'abord, un premier circuit de temporisation 702 fixe la durée du test à une valeur réglable d'une minute à trois heures par exemple.

En effet, comme un débit goutte-à-goutte ne provoque une variation de pression mesurable qu'après une perte de fluide significative, la durée du test comprise entre le moment où le circuit est isolé et celui où, en l'absence de détection d'une perte de fluide significative, l'alimentation est rétablie, ou en présence d'une telle détection, un signal d'avertissement est émis, doit pouvoir être relativement longue.

Cependant dès que le signal électrique de débit atteint une valeur prédéterminée, le signal électrique de commande peut être émis, et ainsi également le signal d'avertissement lumineux ou sonore.

Un deuxième circuit de temporisation 703 relié au premier est alors simultanément excité, pour fixer le délai à l'issue duquel sera émis un autre signal de commande pour commander ou confirmer l'isolement du circuit de fluide, ou éventuellement autoriser l'alimentation de celui-ci. Ce deuxième circuit de temporisation, également à durée réglable, permet de définir le laps de temps alloué pour la recherche de l'origine de la fuite et y porter remède ; cette durée peut également être réglée entre une minute et plusieurs heures (par exemple, en cas de fuite, pour une circuit d'alimentation en eau domestique, on adoptera une durée d'une vingtaine de minutes, et pour une entreprise, une durée de trente cinq minutes environ). Pendant le fonctionnement de ce deuxième circuit de temporisation 703, le test peut se poursuivre de telle sorte que l'appareillage puisse détecter si la fuite a été jugulée, et si cela est le cas autoriser la ré-alimentation et se remettre en position de veille. Le signal de commande émis en réponse au fonctionnement de ce deuxième circuit de temporisation est celui qui est appliqué à l'électrovanne 4 qui, de préférence, équipe l'appareillage selon l'invention. L'unité centrale de commande 70 comporte également, comme on l'a vu, au moins un interrupteur 701 pour commander manuellement la fermeture de l'électrovanne.

Un éventuel troisième circuit de temporisation (non représenté) peut permettre une mise en route et un arrêt de l'alimentation en fluide au moyen de l'électrovanne 4 pour une durée prédéterminée, par exemple pour une opération d'arrosage ou autre.

Le boîtier 7 renfermant l'unité centrale de commande 70 comprenant les différents circuits de temporisation ainsi que leur alimentation, et les alimentations des dispositifs de signalisation et de l'électrovanne, peut être lui-même alimenté sur secteur basse-tension 24 volts en alternatif ou par des accumulateurs ; de préférence, aucune liaison électrique ne le relie au circuit de fluide hormis la liaison à l'électrovanne, en basse tension. La liaison électrique de ce boîtier principal 7 à des boîtiers satellites 8 pour des dispositifs de signalisation 81 distants peut être une liaison par fils, une liaison par induction à boucle basse fréquence, une liaison hertzienne classique, ou encore une liaison dite optique (y compris par infra-rouge).

Ce boîtier 7 est muni de différents organes visibles ou/et accessibles de l'extérieur, et notamment d'un interrupteur 73 de mise en et hors fonctionnement associé à un voyant, d'un interrupteur 74 de mise en circuit d'une sonnerie 72 associé à un voyant, d'un ou deux voyants 71 de signalisation de fuite excités par des signaux de commande et pouvant être clignotants par exemple en alternance, d'un commutateur 75 de test de microfuites pour provoquer ou interrompre un test de microfuites, d'un commutateur ou poussoir 701 de commande de l'électrovanne indépendamment de tout test pouvant être associé à un voyant et éventuellement de fusibles 76 qui peuvent en alternative être inaccessibles de l'extérieur.

Le fonctionnement de l'appareillage est le suivant :

Pour la détection d'une fuite « normale », il n'est pas nécessairement utile que le circuit de fluide soit isolé de sa source d'alimentation, et il peut suffire de vérifier qu'aucun des points de distribution de fluide n'est en fonctionnement (robinets, chasses d'eau, vannes) avant de mettre l'appareillage en service au moyen de son interrupteur général 73, le dispositif de signalisation sonore 72 ayant été éventuellement mis en service au moyen de son propre interrupteur 74. Dans ces conditions, le premier circuit de temporisation 702 est mis en fonctionnement, et simultanément, une variation de débit qui serait due à une fuite est traduite par le détecteur 3 en une variation de pression appliquée au pressostat 6 qui délivre en réponse un signal électrique de débit à l'unité centrale 70 ; lorsque ce signal électrique de débit atteint une valeur prédéterminée, l'unité centrale délivre un signal de commande qui excite les dispositifs de signalisation 71, 72, 81 et déclenche le deuxième circuit de temporisation 703 ; si le débit persiste pendant un laps de temps prédéterminé, un signal de commande ferme l'électrovanne 4 ; en revanche, si, au bout d'un autre (ou le même) laps de temps prédéterminé, le signal électrique de débit n'a pas atteint la valeur prédéterminée, le deuxième circuit de temporisation et les dispositifs de signalisation ne sont pas excités, mais, pour plus de sûreté, il y lieu de faire un test de microfuite.

Pour effectuer un test de microfuite, avant la mise en fonctionnement de l'appareillage dans les mêmes conditions que précédemment, le commutateur 75 de test de microfuites est actionné, ce qui ferme l'électrovanne 4, et comme la quantité de fluide perdue n'est pas remplacée, le débit est plus facile à détecter, mais la suite des opérations reste identique au cas précédent, à cela près que l'électrovanne n'a pas besoin d'être fermée puisqu'elle l'est déjà ; si nécessaire elle peut cependant être ensuite ouverte en mettant fin au test.

Dans l'hypothèse où l'électrovanne 4 est ouverte, mais où cependant le circuit ne reçoit plus de fluide de la source d'alimentation en fluide (par exemple par suite de travaux de voirie), et où un point de distribution de fluide est mis ou resté en position d'ouverture, la mise en fonctionnement de l'appareillage permet de détecter le débit de la même manière que mentionné plus haut, ce qui évite une consommation d'eau inutile, et les dommages qui peuvent résulter du rétablissement de l'alimentation en fluide avec un point de distribution en position ouverte.

Dans le cas où l'appareillage est destiné à équiper un circuit de distribution d'eau muni d'un compteur 9, le détecteur 3 est inséré dans la conduite d'amenée 1 en aval du compteur, et d'une éventuelle électrovanne 4 équipant déjà le circuit de fluide, qui pourra alors être utilisée dans le cadre de l'invention ; en l'absence d'électrovanne à l'origine dans le circuit, une électrovanne est insérée immédiatement en amont du détecteur 3.

Avantageusement, le détecteur 3 de débit est constitué par un régulateur ou réducteur de pression, que l'on a adapté pour remplir cette fonction sans qu'il cesse de remplir sa fonction d'origine de régulateur. Un régulateur de pression à membrane, du type cloche, couramment en laiton, est particulièrement bien adaptable. Il peut être réglé à la pression réglementaire de trois bars, si sa plage de réglage normale inclut cette valeur. La pression peut être vérifiée au moyen d'un manomètre 30 branché à la sortie de ce régulateur 3.

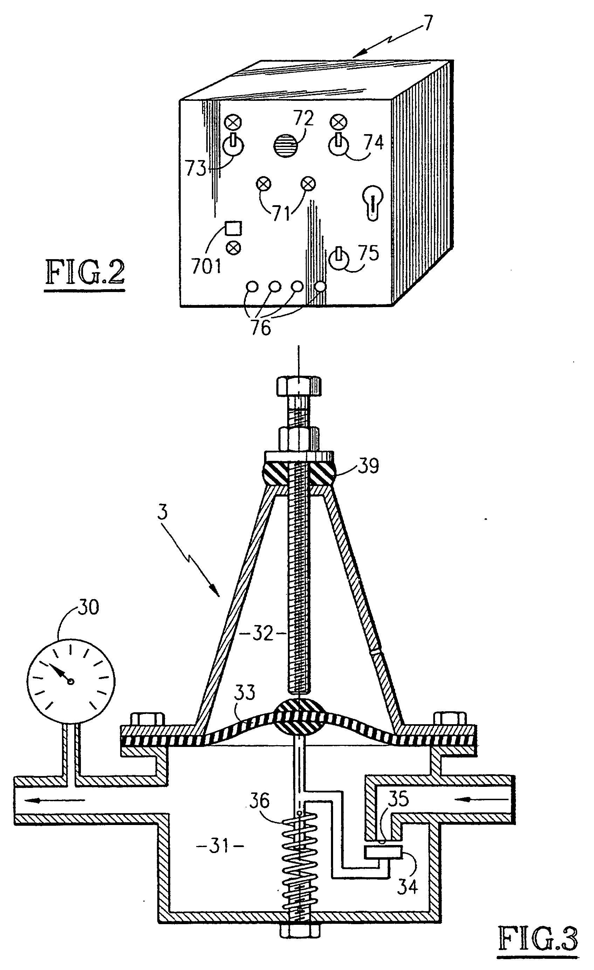

Un tel régulateur ou réducteur est représenté sur la figure 3.

Ce type de régulateur comporte, à l'intérieur d'un boîtier, deux chambres 31,32 isolées l'une de l'autre par une membrane 33 souple. L'une 31 des chambres, destinée à être insérée dans le circuit à réguler, et comportant donc un raccord d'entrée de fluide à pression non régulée et un raccord de sortie de fluide à pression réduite régulée, contient un clapet 34 dont la force de rappel vers son siège 35 et à l'encontre de la pression exercée par le fluide entrant dans la chambre 31 est réglée par les caractéristiques d'un ressort 36. L'autre chambre 32 est normalement remplie d'air et sa paroi comporte un trou de mise à l'air extérieur de très faible diamètre.

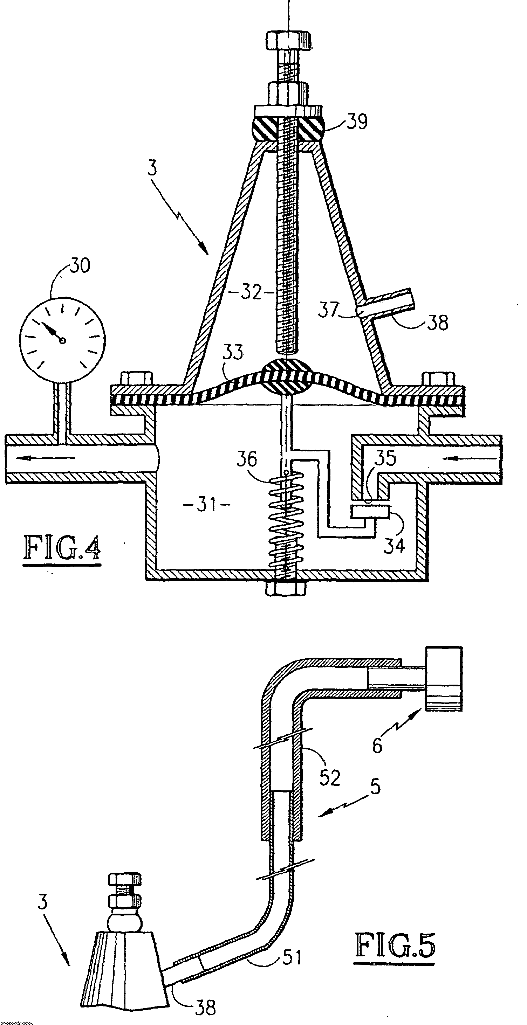

Selon une première forme de réalisation de l'invention (figure 4), ce sont les variations de pression dans cette autre chambre 32 qui sont mises en oeuvre pour traduire la présence d'un débit dans le circuit, c'est-à-dire en particulier dans la chambre 31 qui comporte un clapet 34 de régulation, et qui sont à cet effet appliquées au transducteur 6 sous la forme d'un pressostat à membrane ; un pressostat à membrane à air est particulièrement bien adapté à ce genre d'application en tant que transducteur, compte tenu notamment de sa gamme de pressions de fonctionnement, de son prix et de sa précision ; cependant, la présence d'air dans l'ensemble constitué par ladite autre chambre 32 du réducteur de pression 3, le pressostat, et le système 5 de transmission, présente certains inconvénients ; c'est pourquoi, dans le régulateur modifié selon la première forme de réalisation de l'invention, cette autre chambre ainsi que le tube de transmission sont particulièrement emplis d'un fluide dit hydraulique tel qu'une huile, qui pousse ou ramène une poche d'air sur la membrane du pressostat avec une grande souplesse et un bon amortissement, grâce à sa viscosité, et sans perturber le fonctionnement du régulateur de pression ; cependant, le remplacement de l'air par de l'huile nécessite l'agrandissement du trou de mise à l'air de la paroi de la chambre normalement « à air ». Les autres avantages de l'huile sont de protéger du dessèchement le caoutchouc de la membrane du régulateur, de ne pas être à l'origine d'importantes variations de volume en fonction de la température, de ne pas s'évaporer et se recondenser.

En vue de faciliter la transmission des variations de pression, le régulateur de pression 3 est muni, autour du trou 37 pour l'huile, d'un raccord 38 de liaison en laiton, par exemple brasé.

Par ailleurs, au sommet du régulateur 3, est montée une vis formant butée de réglage de pression (ici réglée pour 3 bars), et le passage pour la vis est étanchéifié par un joint 39 comprimé par une rondelle insérée entre le joint 39 et un écrou vissé autour de la tige filetée de la vis de réglage.

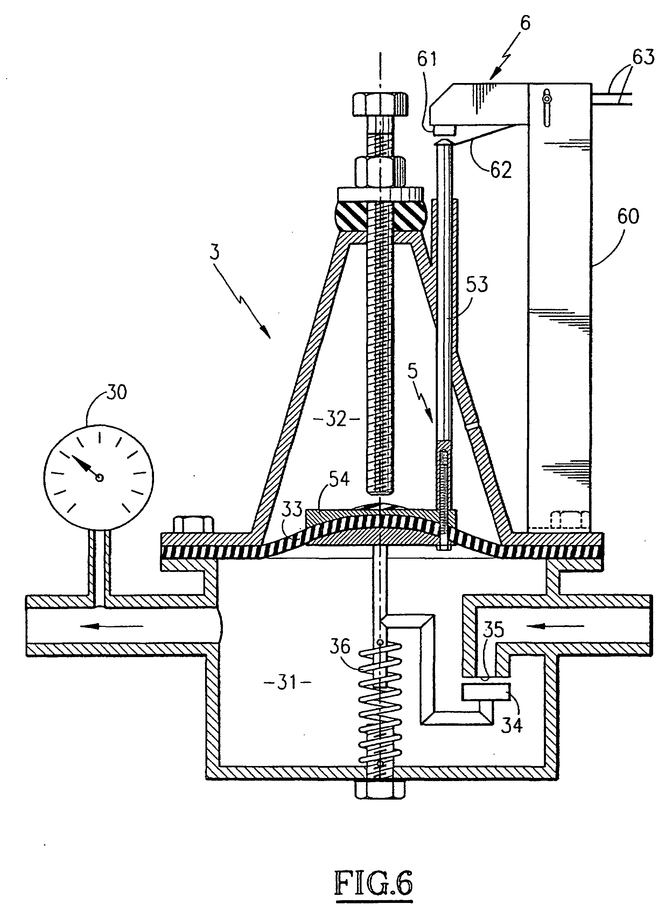

Le raccord 38 de liaison du réducteur de pression 3 est relié à celui du pressostat 6 par un système de transmission télescopique (figure 5), un premier tube 51 étant emmanché autour du raccord 38 du réducteur, un deuxième tube 52 étant emmanché autour du raccord du pressostat, et les deux tubes 51, 52 étant emmanchés l'un dans l'autre de manière coulissante mais étanche ; ce montage permet de régler aisément la sensibilité des dépressions, en enfilant plus ou moins profondément les deux tubes de liaison l'un dans l'autre. De bons résultats sont obtenus avec le pressostat 6 à une trentaine de centimètres au-dessus du régulateur de pression 3 modifié, et une quantité d'huile d'environ deux cents millilitres.

Ainsi, dans le cadre du fonctionnement qui a déjà été décrit plus haut, la variation du débit ou de la pression de fluide dans la chambre 31 du régulateur de pression 3 qui comporte un clapet 34, provoque une variation de pression sur la membrane 33 du régulateur, laquelle est transmise par l'intermédiaire de l'huile et de l'air du système 5 de conduits 51,52, à la membrane du pressostat transducteur 6, la suite du processus se déroulant comme déjà mentionné.

Selon une deuxième forme de réalisation (figure 6), le détecteur est encore un régulateur de pression dont les deux chambres sont séparées par une cloison interne mobile constituée par une membrane 33 ; en revanche, le transducteur 6 n'est plus un pressostat à membrane, mais un interrupteur électrique du type micro-rupteur dont un contact mobile, jouant le même rôle que la membrane du pressostat de la première forme de réalisation, est mû en réponse aux variations de pression ; on notera que sur la figure 6, les éléments correspondants à des éléments des figures 3 et 4 sont désignés par les mêmes références numériques. Cependant, ici, ce ne sont pas les variations de pression dans la chambre supérieure 32 dues aux variations de pression dans la chambre inférieure 31 qui est le siège du débit de liquide, qui sont mises en oeuvre pour traduire la présence d'un tel débit et appliquées à l'organe mobile du transducteur, mais ce sont les variations de pression dans la chambre inférieure qui sont appliquées à des moyens 5 de transmission auxquels est solidarisé le contact du micro-rupteur constituant cet organe mobile.

Ces moyens 5 de transmission comprennent une tige mobile 53 ici métallique en laiton, fixée par exemple au moyen d'une vis à un support 54 de transmission solidarisé à la membrane 33 du détecteur 3, et s'étendant parallèlement à la vis de réglage de la chambre supérieure, dans la même chambre ; le micro-rupteur étant disposé à l'extérieur du réducteur de pression 3 constituant le détecteur, la tige mobile 53 traverse à coulissement la paroi métallique de la chambre supérieure 32 qui, cette fois, n'est pas emplie d'huile et ainsi dont l'orifice de mise à l'air n'a pas à être modifié ; ce micro-rupteur est lui-même solidarisé au boîtier du réducteur par l'intermédiaire d'un support 60 tel qu'une équerre, fixé au boîtier par exemple par vis ; l'emplacement du micro-rupteur peut être ajusté en vue de choisir l'amplitude de la course de la tige mobile 53 donc de la membrane 33 qui provoquera le changement d'état du micro-rupteur et ainsi le seuil de déclenchement du transducteur, qui fonctionne par tout ou rien ; à cette fin, le support 60 peut être réalisé en deux parties dont l'une, portant le micro-rupteur, est mobile en translation longitudinale par rapport à l'autre, qui est fixée au détecteur, ou encore le micro-rupteur peut être fixé à son support 60 par vissage au travers de trous oblongs. Le micro-rupteur choisi est de préférence d'un type étanche et à levier, et ainsi son poussoir 61 agissant sur son contact mobile interne est disposé en regard de ce levier 62 dont l'extrémité libre est elle-même en regard de celle de la tige mobile 53 qui est à l'extérieur du réducteur de pression.

De même que le pressostat 6 de la forme de réalisation précédente, le circuit (ou l'un des circuits) du micro-rupteur est relié à l'unité centrale de commande 70 par des conducteurs électriques 63, pour délivrer à celle-ci un signal électrique de débit provoquant l'élaboration des signaux de commande.

Ainsi, comme cela est le cas de la forme de réalisation précédemment décrite, un écoulement de liquide depuis la chambre inférieure 31 qui est à l'origine d'une variation de pression, se traduit dans le détecteur 3 par un mouvement de la membrane souple 33 entraînant un mouvement du support 54 et de la tige 53 ; plus particulièrement, en cas de fuite, lorsque l'extrémité de la tige 53 s'est déplacée d'une distance prédéterminée par l'ajustement initial de l'emplacement du micro-rupteur, le contact mobile de celui-ci passe à l'état inverse, par exemple d'une position « circuit fermé » à une position « circuit ouvert », ce qui provoque le processus de création des signaux de commande.

Cette forme de réalisation permet d'éviter l'utilisation d'huile dans le réducteur de pression, et d'un pressostat (relativement onéreux), de simplifier la mise en service et les réglages, et d'augmenter la fiabilité.

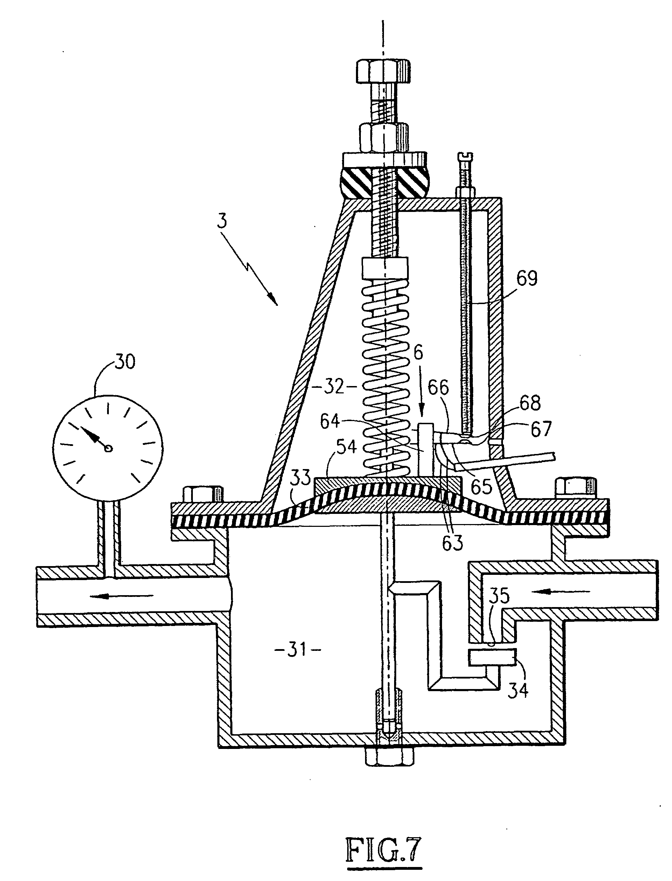

Dans la troisième forme de réalisation (figure 7), le transducteur 6 est également un interrupteur électrique du type micro-rupteur, mais en variante celui-ci est logé dans la chambre supérieure 32 du détecteur et fixé directement par le support 54 de transmission. A titre d'exemple, est représenté sur la figure 7 un détecteur constitué par un réducteur de pression légèrement différent de celui des figures précédentes. Dans cette forme de réalisation, au lieu que, comme dans les formes de réalisation précédentes, la membrane 33 soit soumise à l'effort de rappel d'un ressort 36 hélicoïdal dont les extrémités sont accrochées respectivement à un support d'ancrage fixé dans le fond de la chambre inférieure 31 et à une tige de rappel à laquelle sont solidarisés la membrane 33 et le clapet 34, la tige à laquelle est solidarisée la membrane et le clapet est montée coulissante dans un guide 37 fixé dans le fond de la chambre inférieure 31 ; en revanche, au lieu que la vis de la chambre supérieure joue uniquement le rôle de butée, la membrane est soumise à l'effort de rappel d'un ressort hélicoïdal 38 logé dans cette chambre supérieure 32, contre lequel cette vis ou une bague portée par elle est montée en appui, l'effort de rappel du ressort réglant la pression de fonctionnement du régulateur 3.

Le micro-rupteur est fixé sur le support 54 par sa base 64 portant deux bras flexibles 65,66 munis de deux contacts respectifs 67,68 ; une vis 69 s'étendant parallèlement au ressort de rappel 38, dont la tête est à l'extérieur du régulateur 3 et dont la tige traverse la paroi de la chambre supérieure 32, a, dans cette chambre 32, son extrémité libre en appui contre le contact supérieur 68 ou à proximité de celui-ci ; plus précisément, cette vis 69 est vissée dans la paroi de la chambre supérieure 32 de manière à pénétrer dans cette chambre sur une longueur suffisante pour que, lorsque la membrane 33 est dans la position qu'elle occupe quand la chambre inférieure est emplie de liquide, les deux contacts 67, 68 soient l'un contre l'autre par suite de la flexion au moins du bras 66 qui porte le contact supérieur 68 ; cette vis 69 permet de choisir l'amplitude de la course du support 54 donc de la membrane 33 qui provoque le changement d'état du micro-rupteur et ainsi le seuil de déclenchement du transducteur, qui est fonction de la flexion élastique du bras 65 qui porte le contact inférieur 67 : si, en position « chambre inférieure pleine », le bras inférieur est peu ou pas fléchi élastiquement, un faible mouvement de la membrane entraînera le changement d'état du transducteur 6, tandis que si le bras inférieur est très fléchi élastiquement, une course plus grande de la membrane sera nécessaire. Comme dans la forme de réalisation précédente, les contacts du transducteur sont reliés à l'unité centrale de commande 70 par des conducteurs électriques 63 pour délivrer à celle-ci un signal électrique de débit provoquant l'élaboration de signaux de commande ; de préférence, ce sont deux conducteurs isolés qui sont logés dans une gaine traversant la paroi de la chambre supérieure 32 par un trou différent du trou de mise à l'air.

Il en résulte que là encore, un écoulement de liquide depuis la chambre inférieure 31 qui est à l'origine d'une variation de pression, se traduit dans le détecteur 3 par un mouvement de la membrane 33 entraînant un mouvement du support 54 ; ainsi, en cas de fuite, lorsque le support 54 et la base 64 du transducteur se sont déplacés d'une distance prédéterminée par l'ajustement initial de la vis de réglage 69, le contact inférieur 67 du micro-rupteur passe d'une position « circuit fermé » à une position « circuit ouvert », ce qui provoque la création du signal de commande.

## Revendications

1. Appareillage de signalisation de débit dans un circuit de liquide, **caractérisé en ce qu'**il comporte un détecteur (3) comportant une cloison mobile (33) et adapté pour traduire la présence d'un débit par une variation de la pression sur la cloison (33) qui est fonction de l'intensité du débit, un transducteur (6) fonctionnant en réponse à l'éventuelle variation de pression et qui délivre un signal électrique de débit en fonction de cette variation de pression, une unité centrale de commande (70) reliée électriquement au transducteur (6) pour en recevoir le signal électrique de débit et élaborer au moins un signal électrique de commande en fonction du signal électrique de débit, et au moins un dispositif de signalisation (71,72,81) relié électriquement à l'unité centrale de commande (70) pour en recevoir le signal électrique de commande et émettre en réponse un signal d'avertissement lumineux et/ou sonore lors de la détection d'un débit.

2. Appareillage selon la revendication 1, **caractérisé en ce que** le détecteur (3) est un régulateur de pression à membrane, dont la membrane constitue la cloison mobile (33) et sépare une première et une deuxième chambres (31,32), la première chambre (31) étant insérée dans le circuit de fluide.

3. Appareillage de signalisation de débit selon la revendication 2, **caractérisé en ce qu'**il comporte des moyens (5) de transmission de variation de pression pour transmettre l'éventuelle variation de pression émise par le détecteur au transducteur qui délivre en réponse un signal électrique de débit en fonction de la variation de pression qui lui est transmise.

4. Appareillage selon la revendication 1, **caractérisé en ce que** le transducteur (6) est un pressostat auquel l'éventuelle variation de pression est transmise par des moyens (5) de transmission de variation de pression comportant au moins un tube (51,52) reliant le pressostat au détecteur (3).

5. Appareillage selon la revendication 2, **caractérisé en ce que** la deuxième chambre (32) du régulateur est percée d'un trou (37) pour que cette chambre soit mise en communication, par des moyens (5) de transmission de variation de pression, avec le transducteur (6).

6. Appareillage selon l'une quelconque des revendications 3 à 5, **caractérisé en ce que** les moyens (5) de transmission de variation de pression, pour relier le détecteur (3) au transducteur (6), comportent au moins un tube (51,52), et l'ensemble constitué par la deuxième chambre (32) du détecteur (3) et le tube (51,52) contient une huile et au moins une poche d'air qui s'étend dans au moins une partie du tube (52), du côté du transducteur.

7. Appareillage selon la revendication 1, **caractérisé en ce que** le transducteur (6) est un interrupteur électrique.

8. Appareillage selon la revendication 1, **caractérisé en ce que** le transducteur (6) est un interrupteur électrique disposé à l'extérieur du détecteur (3) et comportant un organe mobile adapté pour coopérer avec le détecteur par l'intermédiaire de moyens (5) de transmission.

9. Appareillage selon la revendication 1, **caractérisé en ce que** le transducteur (6) est un interrupteur électrique comportant un organe mobile adapté pour coopérer avec le détecteur par l'intermédiaire de moyens (5) de transmission comportant une tige mobile (53) solidarisée à la cloison mobile (33) du détecteur (3).

10. Appareillage selon la revendication 9, **caractérisé en ce que** l'organe mobile de l'interrupteur électrique est accouplé à la tige mobile (53) par l'intermédiaire d'un levier (62).

11. Appareillage selon la revendication 1, **caractérisé en ce que** le transducteur (6) est un interrupteur électrique disposé à l'intérieur du détecteur (3) et auquel l'unité centrale de commande (70) est reliée électriquement par des conducteurs (63) traversant une paroi du détecteur (3).

12. Appareillage selon la revendication 1, **caractérisé en ce que** le transducteur (6) est un interrupteur électrique dont des contacts (67,68) sont portés par des bras flexibles (65,66).

13. Appareillage selon la revendication 7, **caractérisé en ce qu'**il comporte des moyens (69) de réglage d'un seuil de déclenchement du transducteur (6).

14. Appareillage selon la revendication 11, **caractérisé en ce que** le transducteur (6) est un interrupteur électrique solidarisé à la cloison mobile (33) du détecteur (3).

15. Appareillage selon la revendication 1, **caractérisé en ce qu'**il comporte une électrovanne (4) reliée électriquement à l'unité centrale de commande (70) pour en recevoir également un signal électrique de commande, et insérée dans le circuit de fluide en amont du détecteur (3) pour autoriser et interrompre le transfert de fluide vers l'aval en fonction au moins de ce signal électrique de commande.

16. Appareillage selon la revendication 15, **caractérisé en ce qu'**il comporte un interrupteur (701) à commande manuelle inséré dans un circuit de liaison électrique de l'unité centrale de commande (70) et de l'électrovanne (4) adapté pour transmettre à l'électrovanne un signal électrique de commande.

17. Appareillage selon la revendication 1, **caractérisé en ce qu'**il comporte un manomètre (30) en aval du détecteur (3).

18. Appareillage selon la revendication 1, **caractérisé en ce que** l'unité centrale de commande (70) est dans un boîtier (7) muni d'au moins un dispositif de signalisation de débit (71,72).

19. Appareillage selon la revendication 1, **caractérisé en ce que** l'unité centrale de commande (70) est dans un boîtier (7), et un autre boîtier (8) situé à distance de celui de l'unité centrale de commande est muni d'au moins un dispositif de signalisation de débit (81).

20. Appareillage selon la revendication 15, **caractérisé en ce qu'**il comporte au moins un circuit de temporisation (703), pour décaler le signal de commande de l'électrovanne (4) par rapport au signal de commande du dispositif de signalisation (71,72,81) d'un temps de retard prédéterminé.

## Patentansprüche

1. Vorrichtung zur Anzeige einer Strömung in einer Flüssigkeitsleitung, **dadurch gekennzeichnet, dass** die Vorrichtung Folgendes aufweist:
ein Abtaster (3) mit einer beweglichen Trennwand (33), welcher zum Umsetzen des Vorhandenseins einer Strömung durch eine Veränderung des Drucks auf die Trennwand (33) ausgebildet ist, der eine Funktion der Intensität der Strömung ist,
ein in Abhängigkeit von der möglichen Druckänderung arbeitender Messgrößenumformer (6), welcher ein elektrisches Signal der Strömung als Funktion dieser Druckänderung liefert,
eine mit dem Messgrößenumformer elektrisch verbundene zentrale Steuereinrichtung (70) zum Empfangen des elektrischen Signals der Strömung von diesem und zum Erstellen mindestens eines elektrischen Steuersignals als Funktion des elektrischen Signals der Strömung, und
mindestens eine mit der zentralen Steuereinrichtung (70) elektrisch verbundene Anzeigeeinrichtung (71, 72, 81) zum Empfangen des elektrischen Steuersignals der Steuereinrichtung und zum davon abhängigen Aussenden eines leuchtenden und/oder tönenden Warnsignals während der Erfassung einer Strömung.

2. Vorrichtung nach Anspruch 1, **dadurch gekennzeichnet, dass** der Abtaster (3) ein Membrandruckregler ist, dessen Membran die bewegliche Trennwand (33) bildet und eine erste und eine zweite Kammer (31, 32) voneinander trennt, wobei die erste Kammer (31) in die Flüssigkeitsleitung eingefügt ist.

3. Vorrichtung nach Anspruch 2, **dadurch gekennzeichnet, dass** die Vorrichtung Druckänderungs-Übertragungseinrichtungen (5) von der vom Abtaster zum Messwertumformer ausgesendeten möglichen Druckänderung aufweist, welcher davon abhängig ein elektrisches Signal der Strömung als Funktion der Druckänderung liefert, die ihm übertragen wurde.

4. Vorrichtung nach Anspruch 1, **dadurch gekennzeichnet, dass** der Messgrößenumformer (6) ein Druckregler ist, welchem die mögliche Druckänderung durch Druckänderungs-Übertragungseinrichtungen (5) übertragen wird, wobei der Messgrößenumformer (6) mindestens ein Rohr (51, 52) aufweist, welches den Druckregler mit dem Abtaster (3) verbindet.

5. Vorrichtung nach Anspruch 2, **dadurch gekennzeichnet, dass** in die zweite Kammer (32) des Reglers ein Loch (37) eingebracht ist, damit diese Kammer durch Druckänderungs-Übertragungseinrichtungen (5) in Verbindung mit dem Messgrößenumformer (6) gebracht ist.

6. Vorrichtung einem der Ansprüche 3 bis 5, **dadurch gekennzeichnet, dass** die Druckänderungs-Übertragungseinrichtungen (5) zum Verbinden des Abtasters (3) mit dem Messgrößenumformer (6) mindestens ein Rohr (51, 52) aufweisen, und die aus der zweiten Kammer (32) des Abtasters (3) und dem Rohr (51, 52) gebildete Gesamtheit ein Öl und mindestens einen Luftsack aufweist, welcher sich in mindestens einem Abschnitt des Rohrs (52) auf der Seite des Messgrößenumformers erstreckt.

7. Vorrichtung nach Anspruch 1, **dadurch gekennzeichnet, dass** der Messgrößenumformer (6) ein elektrischer Schalter ist.

8. Vorrichtung nach Anspruch 1, **dadurch gekennzeichnet, dass** der Messgrößenumformer (6) ein elektrischer Schalter ist, welcher außerhalb des Abtasters (3) angeordnet ist, wobei er ein bewegliches Bauteil aufweist, das zum Zusammenwirken mit dem Abtaster mittels der Übertragungseinrichtung (5) ausgebildet ist.

9. Vorrichtung nach Anspruch 1, **dadurch gekennzeichnet, dass** der Messgrößenumformer (6) ein elektrischer Schalter ist, welcher ein bewegliches Bauteil aufweist, das zum Zusammenwirken mit dem Abtaster mittels der Übertragungseinrichtung (5) ausgebildet ist, wobei die Übertragungseinrichtung (5) eine mit der beweglichen Trennwand (33) des Abtasters (3) verbundene bewegliche Stange (53) aufweist.

10. Vorrichtung nach Anspruch 9, **dadurch gekennzeichnet, dass** das bewegliche Bauteil des elektrischen Schalters mit der beweglichen Stange (53) mittels eines Hebels (62) gekoppelt ist.

11. Vorrichtung nach Anspruch 1, **dadurch gekennzeichnet, dass** der Messgrößenumformer (6) ein im Innern des Abtasters (3) angeordneter elektrischer Schalter ist, und mit welchem die zentrale Steuereinrichtung (70) über Leitungen (63) elektrisch verbunden ist, die eine Wand des Abtasters (3) durchdringen.

12. Vorrichtung nach Anspruch 1, **dadurch gekennzeichnet, dass** der Messgrößenumformer (6) ein elektrischer Schalter ist, dessen Schaltkontakte (67, 68) von flexiblen Armen (65, 66) getragen sind.

13. Vorrichtung nach Anspruch 7, **dadurch gekennzeichnet, dass** die Vorrichtung Stelleinrichtungen (69) für eine Auslöseschwelle des Messgrößenumformers (6) aufweist.

14. Vorrichtung nach Anspruch 11, **dadurch gekennzeichnet, dass** der Messgrößenumformer (6) ein elektrischer Schalter ist, welcher mit der beweglichen Trennwand (33) des Abtasters (3) verbunden ist.

15. Vorrichtung nach Anspruch 1, **dadurch gekennzeichnet, dass** die Vorrichtung ein Elektroventil (4) aufweist, welches elektrisch mit der zentralen Steuereinrichtung (70) verbunden ist, um von dieser ebenfalls ein elektrisches Steuersignal zu erhalten, und welches in die Flüssigkeitsleitung in Strömungsrichtung vor dem Abtaster (3) eingefügt ist, um die Übertragung von Flüssigkeit in Strömungsrichtung in Funktion von mindestens diesem einen elektrischen Steuersignal zuzulassen oder zu unterbrechen.

16. Vorrichtung nach Anspruch 15, **dadurch gekennzeichnet, dass** die Vorrichtung einen manuell betätigbaren Schalter (701) aufweist, welcher in einem elektrischen Verbindungsschaltkreis der zentralen Steuereinrichtung (70) und des Elektroventils (4) eingefügt und zur Übertragung eines elektrischen Steuersignals an das Elektroventil ausgebildet ist.

17. Vorrichtung nach Anspruch 1, **dadurch gekennzeichnet, dass** die Vorrichtung ein Manometer (30) in Strömungsrichtung hinter dem Abtaster (3) aufweist.

18. Vorrichtung nach Anspruch 1, **dadurch gekennzeichnet, dass** die zentrale Steuereinrichtung (70) in einem Gehäuse (7) angeordnet ist, welches mit mindestens einer Strömungsanzeigeeinrichtung (71, 72) ausgerüstet ist.

19. Vorrichtung nach Anspruch 1, **dadurch gekennzeichnet, dass** die zentrale Steuereinrichtung (70) in einem Gehäuse (7) angeordnet ist, und ein in einem Abstand zu dieser zentralen Steuereinrichtung (70) angeordnetes weiteres Gehäuse (8) mit mindestens einer Strömungsanzeigeeinrichtung (81) ausgerüstet ist.

20. Vorrichtung nach Anspruch 15, **dadurch gekennzeichnet, dass** die Vorrichtung mindestens eine Verzögerungsschaltung (703) aufweist, um das Steuersignal des Elektroventils (4) in Bezug auf das Steuersignal der Anzeigeeinrichtung (71, 72, 81) um eine vorher festgelegte Verzögerungszeit zu verschieben.

## Claims

1. Assembly for flow indication in a liquid circuit, **characterised in that** it comprises a detector (3) comprising a movable partition (33) fitted to interpret the presence of a flow on the basis of a variation in pressure on the partition (33), which is dependent on the intensity of the flow, a transducer (6) acting in response to the possible pressure variation, which supplies an electric flow signal on the basis of this pressure variation, a central control unit (70) electrically connected to the transducer (6) to receive the electric flow signal therefrom and create at least one electric control signal on the basis of the electric flow signal, and at least one indication device (71, 72, 81), which is electrically connected to the central control unit (70) to receive the electric control signal therefrom and emit a light and/or audio warning signal in response upon detection of a flow.

2. Assembly according to Claim 1, **characterised in that** the detector (3) is a pressure-sensitive regulator, the membrane of which constitutes the movable partition (33) and separates a first and a second chamber (31, 32), the first chamber (31) being disposed in the liquid circuit.

3. Assembly for flow indication according to Claim 2, **characterised in that** it comprises means (5) for transmitting pressure variation for transmission of the possible pressure variation emitted by the detector to the transducer, which in response supplies an electric flow signal on the basis of the pressure variation transmitted to it.

4. Assembly according to Claim 1, **characterised in that** the transducer (6) is a pressure controller, to which the possible pressure variation is transmitted by the means (5) for transmitting pressure variation comprising at least one tube (51, 52) connecting the pressure controller to the detector (3).

5. Assembly according to Claim 2, **characterised in that** the second chamber (32) of the regulator is provided with a hole (37) to enable this chamber to be connected to the transducer (6) via the means (5) for transmitting pressure variation.

6. Assembly according to any one of Claims 3 to 5, **characterised in that** for connection of the detector (3) to the transducer (6), the means (5) for transmitting pressure variation comprise at least one tube (51, 52), and the unit formed by the second chamber (32) of the detector (3) and the tube (51, 52) contains an oil and at least one air pocket, which extends into at least one section of the tube (52) from the side of the transducer.

7. Assembly according to Claim 1, **characterised in that** the transducer (6) is an electric switch.

8. Assembly according to Claim 1, **characterised in that** the transducer (6) is an electric switch disposed outside the detector (3) and comprising a movable element fitted to cooperate with the detector via the transmission means (5).

9. Assembly according to Claim 1, **characterised in that** the transducer (6) is an electric switch comprising a movable element fitted to cooperate with the detector via the transmission means (5) comprising a movable bar (53) interlinked with the movable partition (33) of the detector (3).

10. Assembly according to Claim 9, **characterised in that** the movable element of the electric switch is coupled to the movable bar (53) via a lever (62).

11. Assembly according to Claim 1, **characterised in that** the transducer (6) is an electric switch, which is disposed inside the detector (3) and to which the central control unit (70) is electrically connected by conductors (63) crossing a wall of the detector (3).

12. Assembly according to Claim 1, **characterised in that** the transducer (6) is an electric switch, the contacts (67, 68) of which are carried by flexible arms (65, 66).

13. Assembly according to Claim 7, **characterised in that** it comprises means (69) for regulating a threshold for actuating the transducer (6).

14. Assembly according to Claim 11, **characterised in that** the transducer (6) is an electric switch interlinked with the movable partition (33) of the detector (3).

15. Assembly according to Claim 1, **characterised in that** it comprises a solenoid valve (4), which is electrically connected to the central control unit (70) to also receive an electric control signal from it and which is inserted in the liquid circuit upstream of the detector (3) to permit and interrupt the transfer of liquid downstream on the basis of at least this electric control signal.

16. Assembly according to Claim 15, **characterised in that** it comprises a manual control switch (701), which is inserted in an electric link circuit of the central control unit (70) and of the solenoid valve (4) and fitted to transmit an electric control signal to the solenoid valve.

17. Assembly according to Claim 1, **characterised in that** it comprises a pressure gauge (30) downstream of the detector (3).

18. Assembly according to Claim 1, **characterised in that** the central control unit (70) is in a case (7) fitted with at least one flow indication device (71, 72).

19. Assembly according to Claim 1, **characterised in that** the central control unit (70) is in a case (7), and another case (8) located at a distance from that of the central control unit is fitted with at least one flow indication device (81).

20. Assembly according to Claim 15, **characterised in that** it comprises at least one delay circuit (703) to shift the control signal of the solenoid valve (4) in relation to the control signal of the indication device (71, 72, 81) by a predetermined delay time.
